# EUROPEAN PATENT APPLICATION

(11) **EP 4 062 799 A1**
(43) Date of publication of application: **28.09.2022**
(21) Application number: 22162635.1
(22) Date of filing: 17.03.2022
(51) Int. Cl.: A47B 13/08, A47B 13/00, F16B 12/14, A47C 4/02, A47C 4/03, A47B 96/20

(54) **MODULAR FURNITURE**

(30) Priority: 22.03.2021 US 202163164099 P
(71) Applicant: 2724889 Ontario Inc., Oakville, ON L6L 3H5 (CA)
(72) Inventor: Styrc, Jacek, Oakville (CA); Lysiak, Sebastian, Bielsko-Biala (PL)
(74) Representative: Glawe, Delfs, Moll

(57) **Abstract**

An article of furniture (10) having a pair of side supports (12). The side supports (12) are formed from panels of a sheet material having oppositely directed faces. An array of holes is formed in each panel extending between the faces and arranged as a uniform grid. Support members (14) extend between the panels (12) and are secured to the panels by fasteners passing through the holes and in to the ends of the support members. The placement of the support members (14) may be adjusted to meet the configuration of furniture required with the fasteners passing through the appropriate ones of the holes in each panel (12).

## Description

### FIELD OF THE INVENTION

The present invention relates to furniture

### DESCRIPTION OF THE PRIOR ART

Furniture is a staple product and covers a wide range of products and configurations. One pre-requisite is that it is sturdy and capable of withstanding the environment in which it is placed.

Items of furniture tend to be bulky and therefore expensive to transport and deliver. Knock down or flat pack furniture alleviates this and is popular for interior furniture. However, generally speaking the materials and the fastening systems used are not well suited to exterior use. Moreover, all the components required for a finished item are included so the weight and bulk of the packed furniture is increased.

It is an object of the present invention to provide a furniture system that obviates or mitigates the above disadvantages.

### SUMMARY OF THE INVENTION

In general terms the present invention provides an article of furniture having a pair of side supports. The side supports are formed from panels of a sheet material having oppositely directed faces. An array of holes is formed in each panel extending between the faces and arranged as a uniform grid. Support members extend between the panels and are secured to the panels by fasteners passing through the holes and in to the ends of the support members. The placement of the support members may be adjusted to meet the configuration of furniture required with the fasteners passing through the appropriate ones of the holes in each panel.

Preferably, the support members may be formed from dimensional lumber to permit local sourcing and variation in the configuration of the article of furniture.

In another aspect, the present invention provides a pair of side members for use with a set of slats to provide an article of furniture. The side members have oppositely directed major surfaces on opposite sides of a core, a rectilinear grid of holes extends between the major surfaces to facilitate connection of the slats to the side members.

In yet another aspect, a side support for an article of furniture is provided, the side support formed from a panel of a sheet material having oppositely directed faces, an array of holes formed in the panel extending between the faces and arranged as a uniform grid, the holes accommodating fasteners to secure the ends a plurality of support members between the pair of side supports.

The side support may be made from steel.

The side support may have a thickness of about 1/8 inch.

The side support may be a wood laminate or resin material.

The side support may have a thickness of about ½ inch or % inch.

The uniform grid may be a rectilinear grid with uniform spacing between the holes.

The holes may have a diameter about ¼ inch.

The uniform spacing may be about 1 inch.

The faces may delimit a core and the holes are formed through the core.

In yet another aspect, an article of furniture formed by a pair of side supports and a plurality of the support members fastened to each of the side supports is provided.

Each support member may be fastened to each side support by more than one fastener secured through more than one hole.

The support member may be nominal 4x4 lumber and up to 9 holes are provided for the side support.

Four fasteners may be arranged in a 2 by 2 grid for fastening the side support to the support member.

The article of furniture may be a stool or chair.

The article of furniture may be a table.

### BRIEF DESCRIPTION OF THE DRAWINGS

The features of the invention will become more apparent in the following detailed description in which reference is made to the appended drawings wherein:
FIG. 1 is perspective view of a table;
FIG. 2 is an exploded view of the table of FIG. 1;
FIG. 3 is a front elevation of the table of FIG. 1;
FIG. 4 is a side view of the table FIG. 1;
FIG. 5 is a section on the line V-V of FIG. 4;
FIG. 6 is a front perspective view of an alternative embodiment of table;
FIG. 7 is an exploded view showing the components of the chair of the table of FIG. 6;
FIG. 8 is a perspective view of a stool;
FIG. 9 is an exploded view of the stool of FIG. 8;
FIG. 10 is a rear perspective view of the stool of FIG. 8;
FIG. 11 is a front perspective view of a chair;
FIG. 12 is an exploded view of the chair of FIG.11;
FIG. 13 is a perspective view of a lounger;
FIG. 14 is an exploded view of the lounger of FIG. 13;
FIG. 15 is a side view of the lounger of FIG. 13;
FIG. 16 is a plan view of the lounger of FIG. 13;
FIG. 17 is a perspective view of an alternate embodiment of lounger;
FIG. 18 is an exploded view of the lounger of FIG. 17;
FIG. 19 is a rear perspective view of the lounger of FIG. 17;
FIG. 20 is a front perspective view of a further embodiment of lounger;
FIG. 21 is an exploded perspective view of the lounger of FIG. 20; and
FIG. 22 is a rear perspective view of the lounger of FIG. 21.

### DETAILED DESCRIPTION OF THE INVENTION

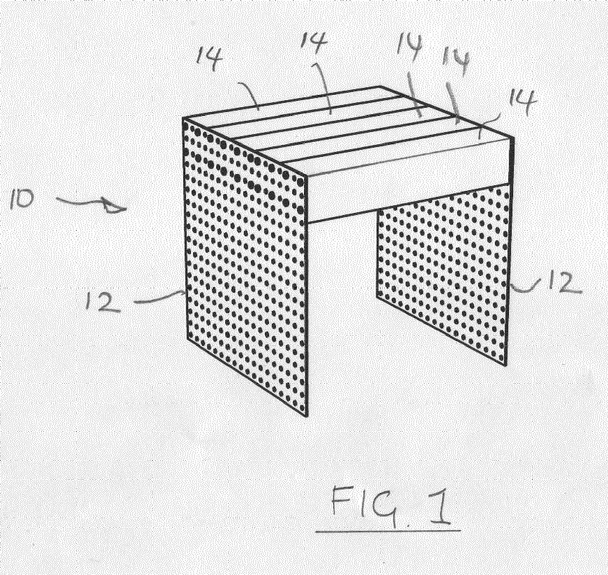

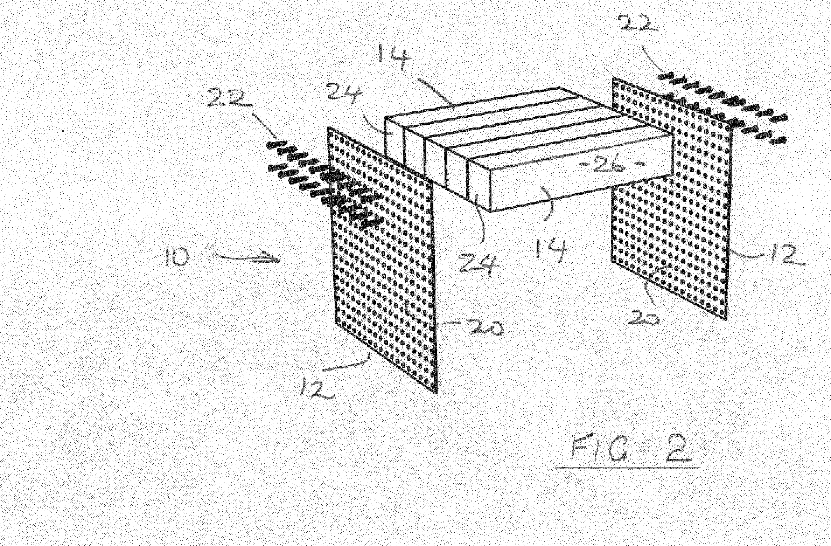

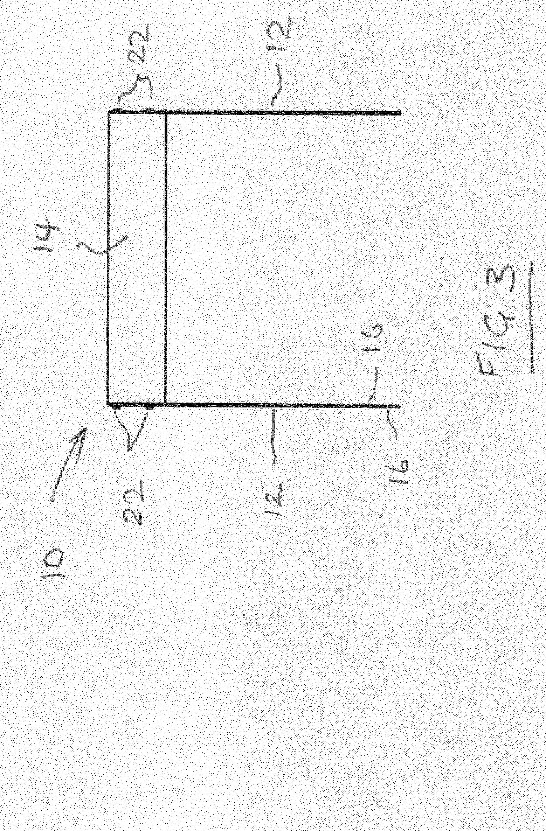

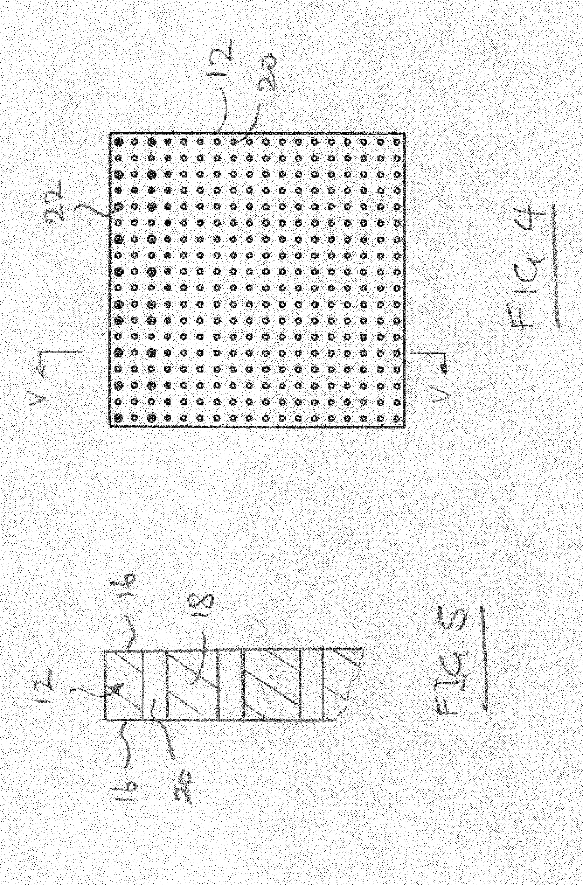

Referring first to the embodiment of FIG. 1 to 6, a table 10 has a pair of side members 12 and slats 14 extending between the side members 12. The side members 12 are formed from panels of a rigid material, such as a metal, or wood laminate or resin that has the requisite rigidity and strength to support the loads intended. As seen in FIG. 4 and 5, the side members 12 have oppositely directed major faces 16 delimiting a core 18. The thickness of the side members 12 will depend on the material used and may vary from 1/8 in. for a steel plate to ½ in or ¾ in. for a wood laminate or resin material.

Holes 20 pass through the core 18 between the faces 16 and are arranged in a rectilinear grid like array with a uniform spacing between the holes. Typically, the holes 20 are a nominal ¼ in. diameter spaced apart on 1 in. centres on both the x and y axes. Other hole diameter and spacing may be used to suit the particular application.

The slats 14 are made from dimensional lumber, such as a nominal 4x4 or 6x6, and are of equal length. The slats have end faces 24 and side faces 26. The slats 14 are secured to the side members 12 by fasteners 22, preferably flat head screws.

To assemble the table 10, the first slat 14 is positioned with an end face 24 in engagement with the face 16 so as to be normal to the face 16 of one of the side members 12 and with the side faces 26 of the slats 14 in alignment with the edges of the side member 12. In this position, the end face 24 covers a number of the holes 20, typically 9 holes for a 4x4 with the holes 20 as described above. The fasteners 22 may then be inserted in the holes 20 and driven in to the end face 24 of the slat 14. Typically, four fasteners arranged in a 2x2 grid are used to fasten each slat 14 to a respective side member 12.

After the first of the slats 14 is attached, the remainder may be attached in a similar manner at the required spacing between the slats 14. The placement of the holes 20 ensures that a plurality of holes 20 are covered by each of the end faces 24 to secure the slats 14 in the desired location and orientation.

Once the slats 14 are attached to one of the side members 12, the other side member 12 is attached in a similar manner to provide the table 10.

The rectilinear grid of holes 20 maintains alignment of the fasteners 22 across the side members 12 for aesthetic considerations and avoids the need for special tools or manufacturing techniques.

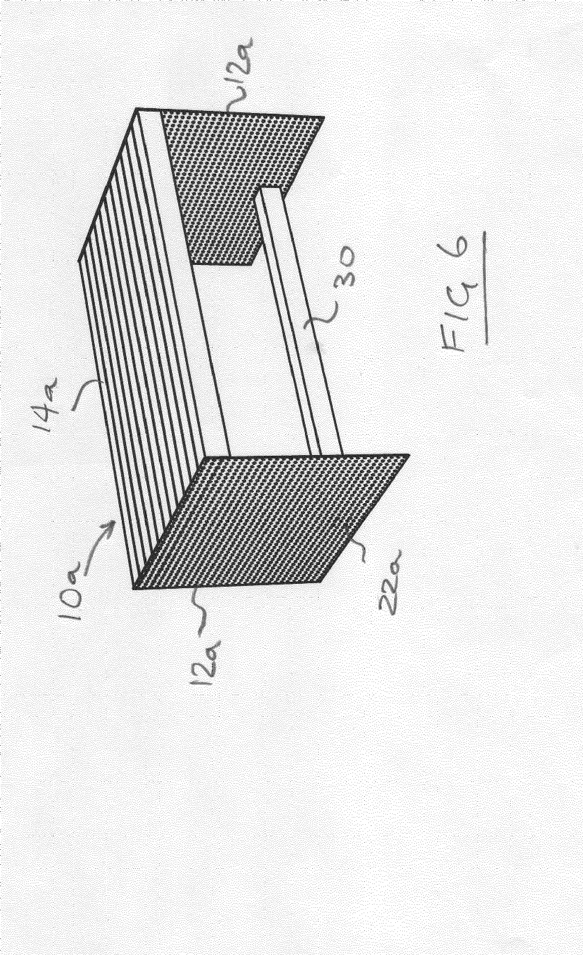

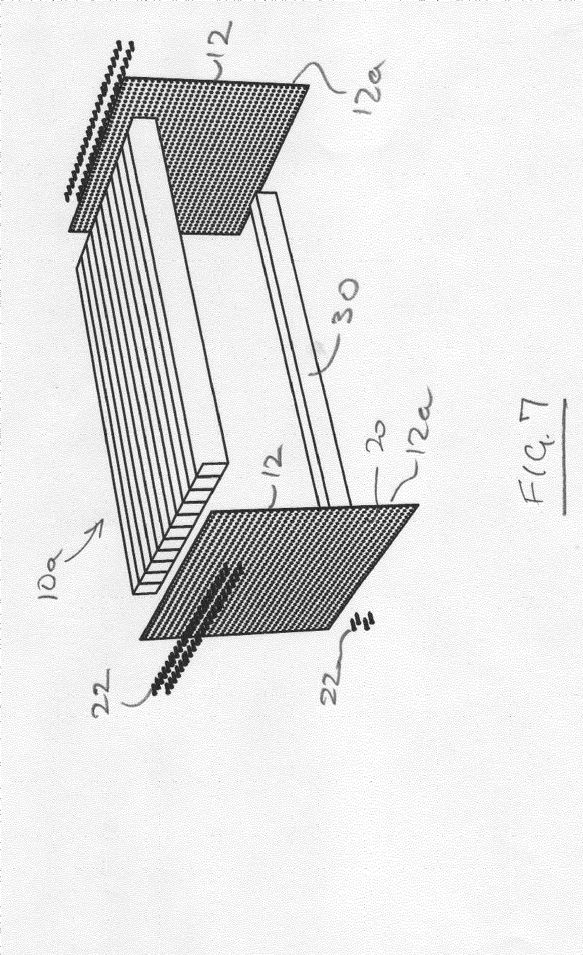

An alternative embodiment of table is shown in FIG. 6 and 7 with like reference numerals used to denote like components with a suffix "a" added for clarity. The table 10a uses similar side members 12a with a grid of holes 20a but the slats 14a are longer. The slats 14a are secured by fasteners 22a at the top edge of the side members 12a.

A foot rest 30 of the same length as the slat 14a is secured between the side members 12a adjacent to but spaced from the lower edge of the side member 12a. Conveniently, the foot rest 30 may be of the same dimension as the slats 14a or can be a different dimension, for example a 2×4 if appropriate. End faces of the foot rest 30 cover a number of holes 20a to allow fasteners 22a to secure it the foot rest 30 to the side members 12a.

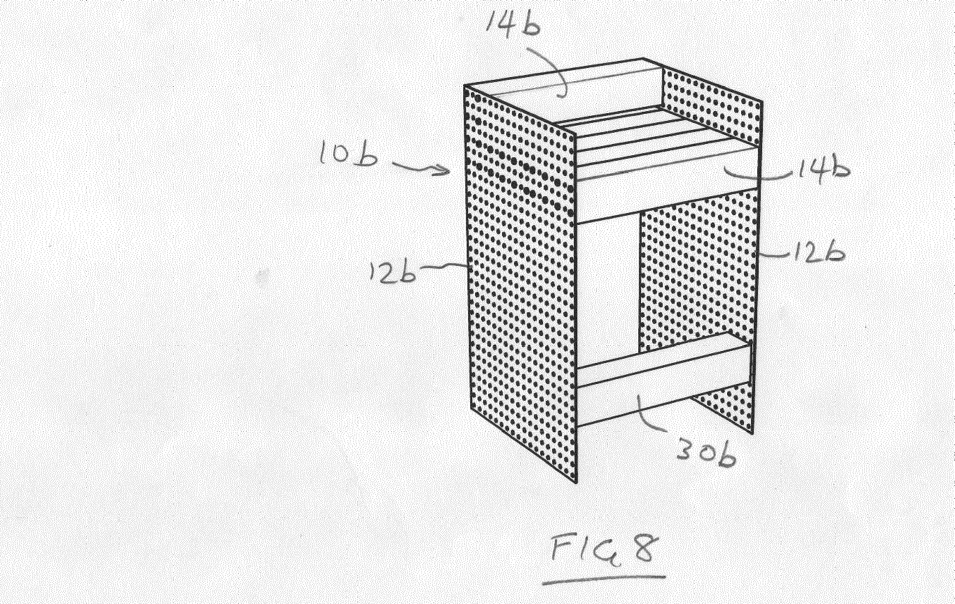

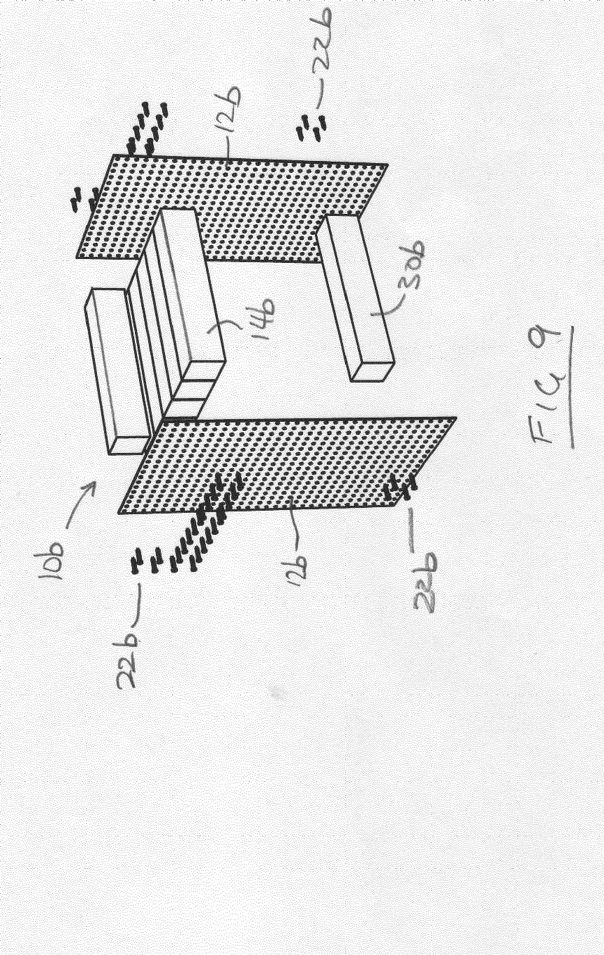

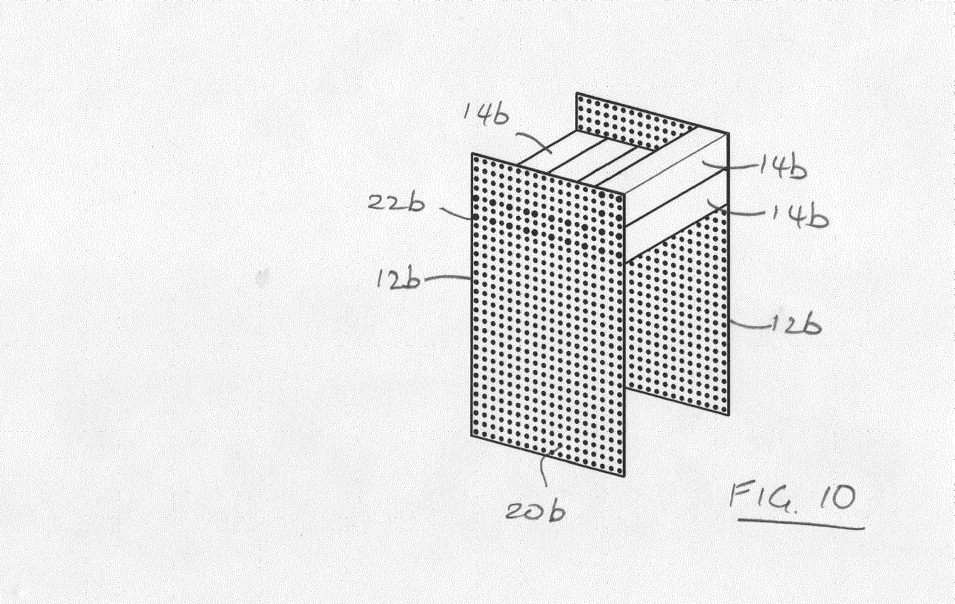

A similar construction may be used to provide a stool 10b as shown in FIGS 8 to 10. Side members 12b have a rectangular format to provide an increased height and have a rectilinear grid of holes 20b. A seat is provided by slats 14b that are inset from the upper edge of the side members 12b to provide arm portions. A back is formed from a slat 14b extending between upper rear corners of the side members 12b and secured by fasteners 22b.

A foot rest 30b is located at the front edge of the side members 12b at a height to suit an occupant of the stool. It will be seen that the grid permits the different components to be arranged in the required configuration without customised drilling or cutting of the side members 12b.

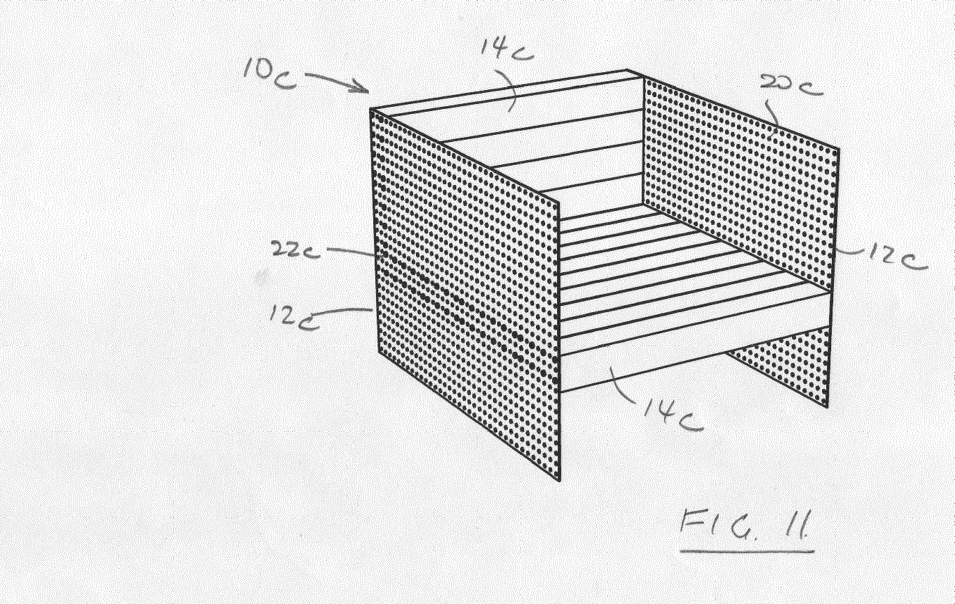

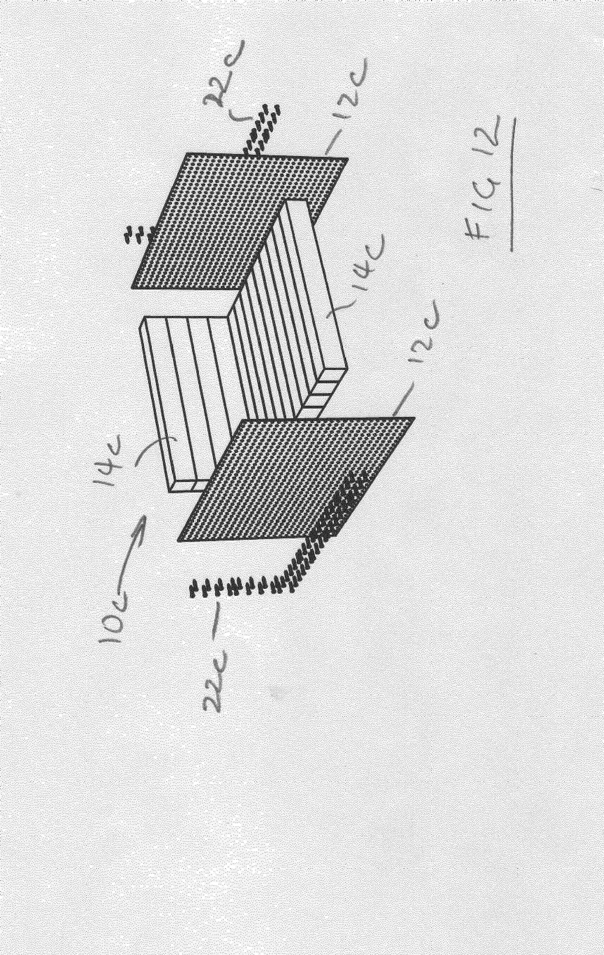

The versatility of the side members 12 is shown in FIG. 11 and 12 where a pair of side members 12c are used to support slats 14c to form a chair 10c. Slats 14c are connected to the side members 12c approximately 1/3^{rd} of the height of the side members 12c and further slats 14c extend along the rear edge of the side members 12c to provide a back.

If preferred, the slats 14c may be staggered toward the front of the seat 10c and rotated to provide a sloped back. The spacing of holes 20c allows for such adjustment with the end faces 24c of the slats 14c overlapping several holes to permit fastening.

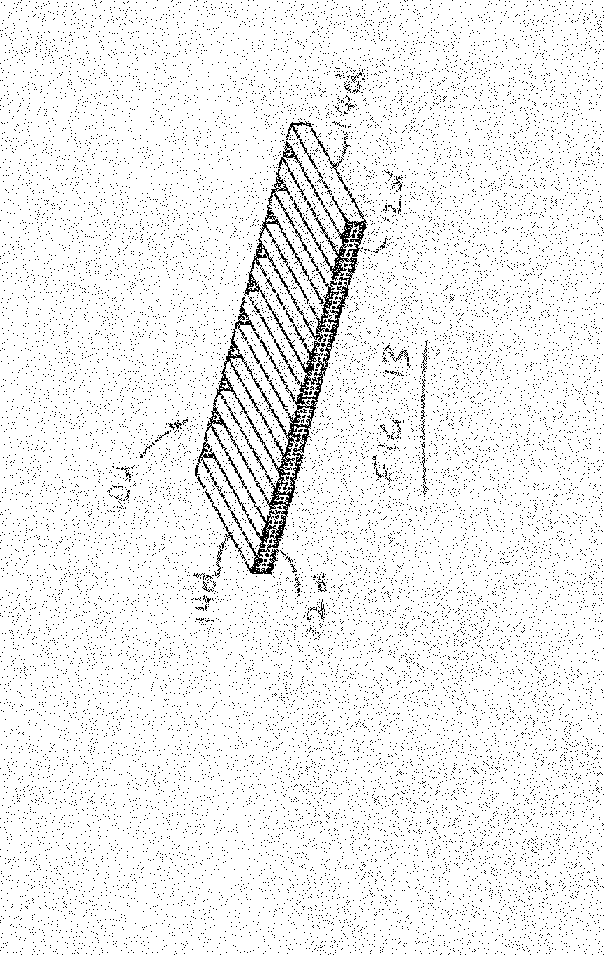

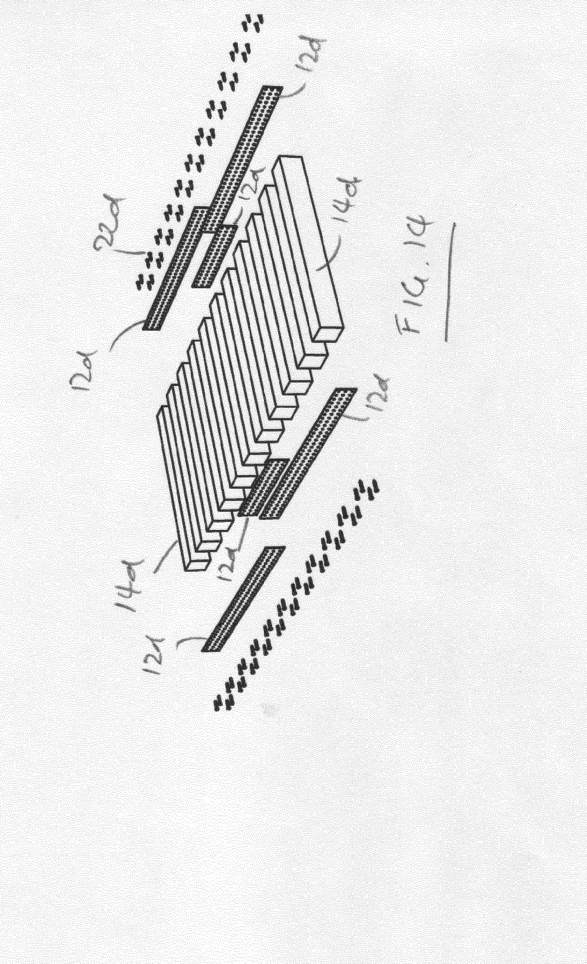

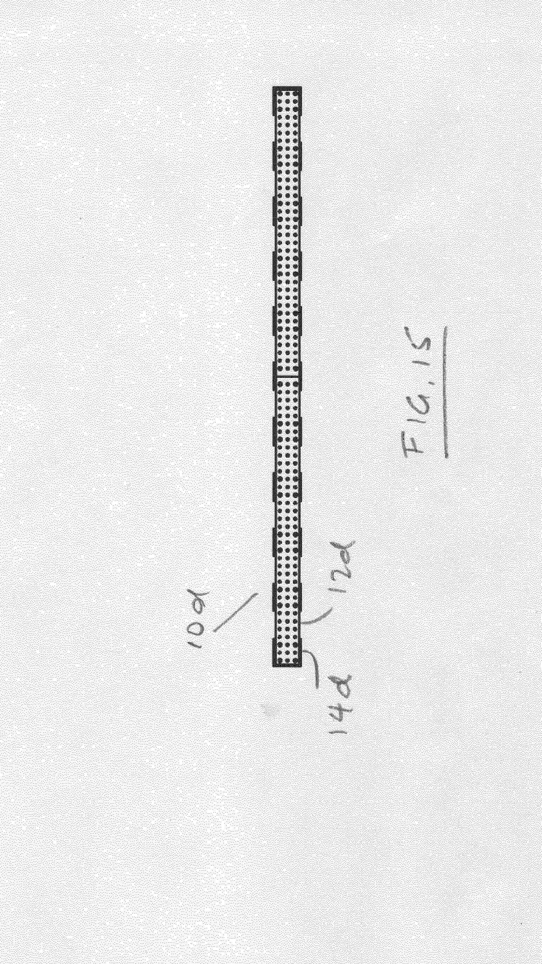

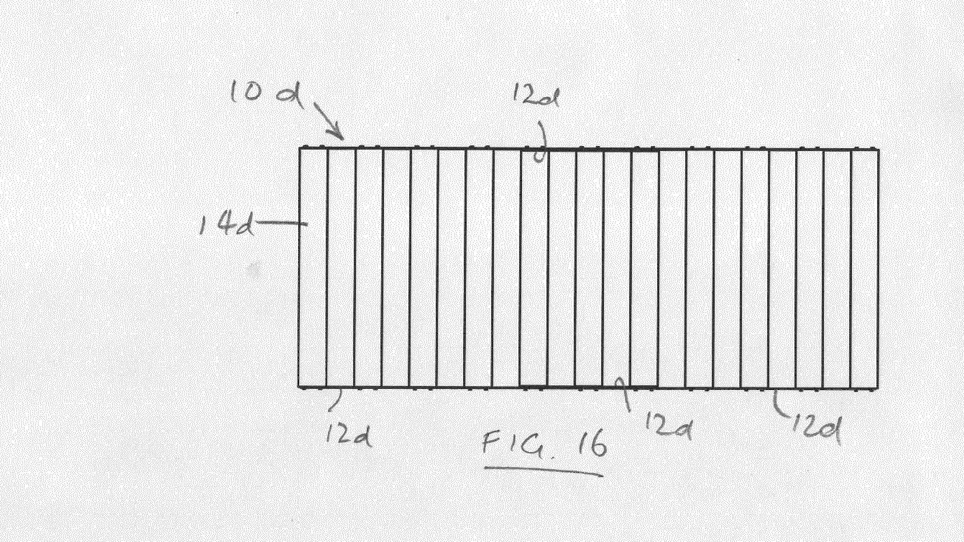

Multiple side members 12 may be connected to one another to provide an elongate structure, such as the lounger 10d shown in FIG. 13 to 16. As can best be seen in FIG. 14, two side members 12d are arranged end to end and bridged by a connecting side member 12d. Holes 20d are arranged on an identical rectilinear grid in each side member 12d so they can be aligned where the side members 12d overlap.

Slats 14d are connected between the side members 12d by fasteners 22d which also connect the bridging side member 12d to each of the other side members 12d where they overlap. The slats 14d and side members 12d combine to form a unitary platform structure.

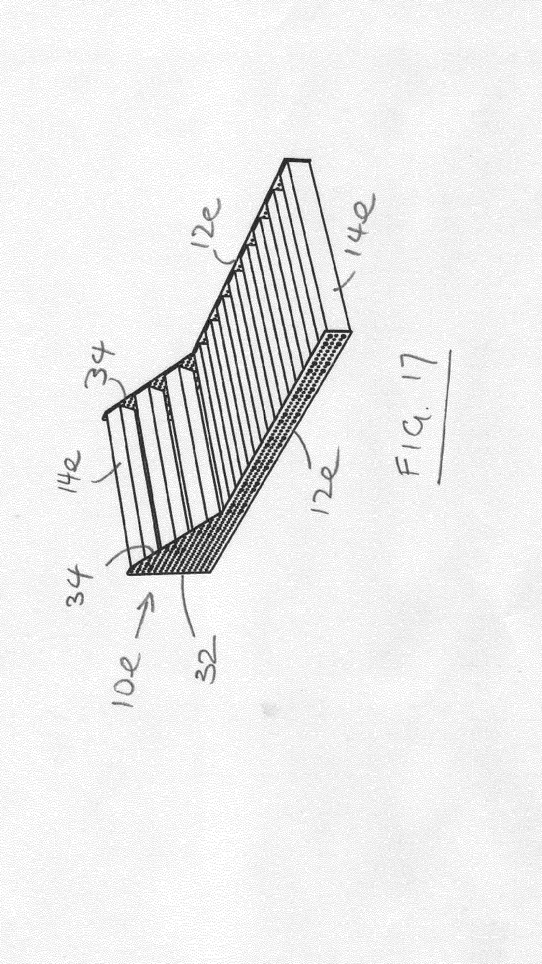

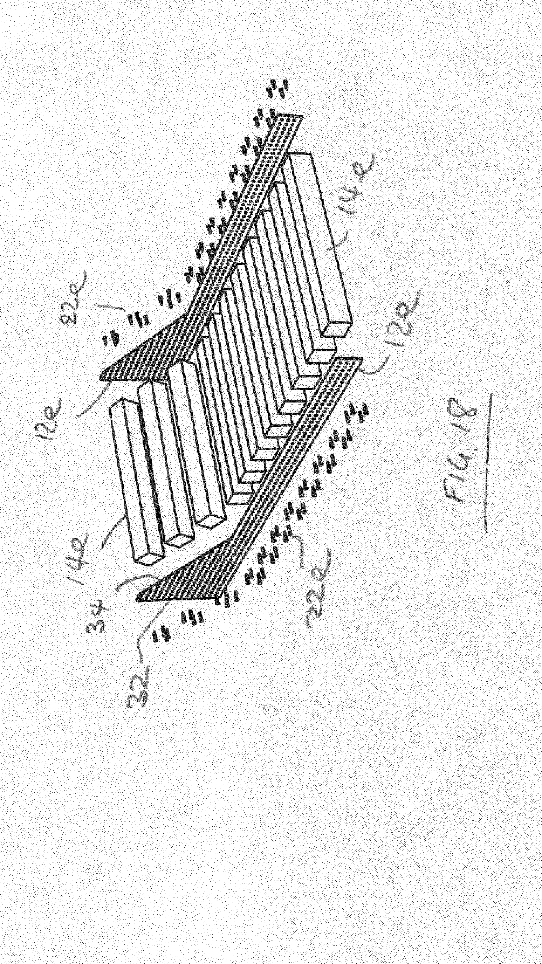

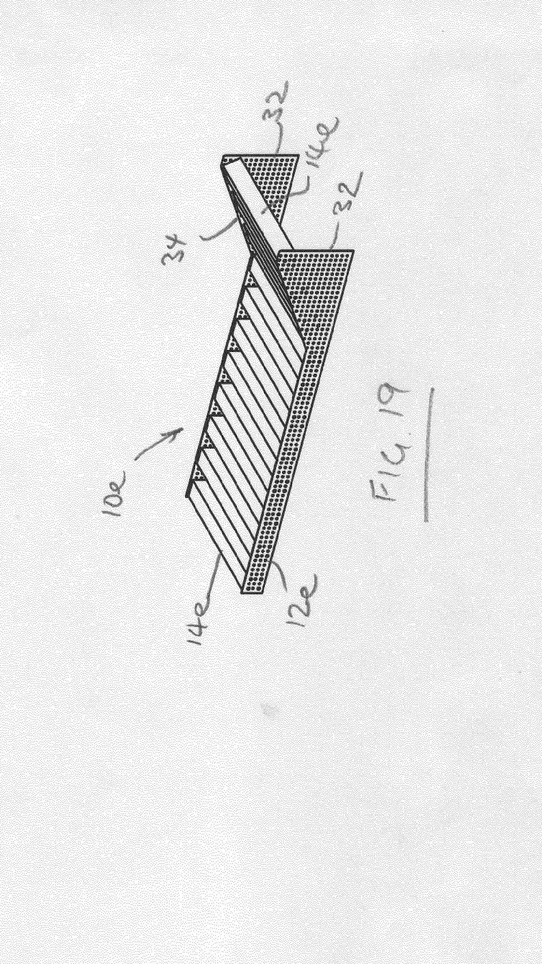

A lounger 10e can be formed with a sloping backrest as shown in FIG. 17 to 19. One end of side members 12e is formed with a wider triangular section 32 having an inclined upper edge 34. Slats 14e are secured along the inclined edge 34 to provide the backrest with the grid of holes 220e ensuring a plurality of fasteners for each slat 14e.

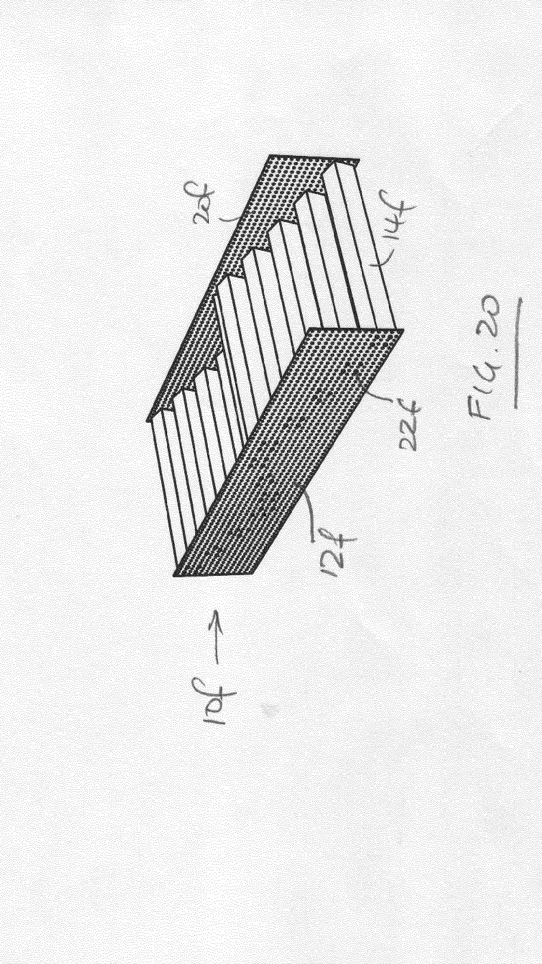

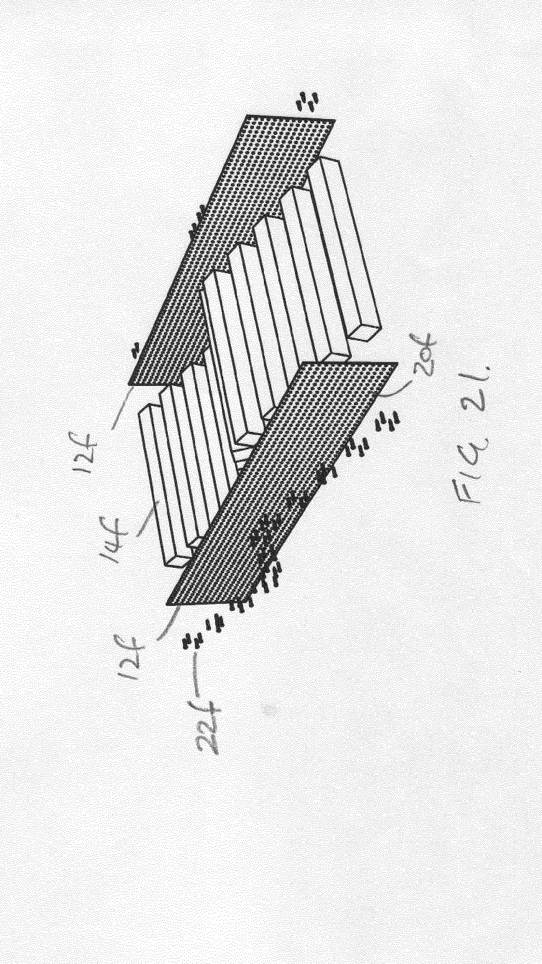

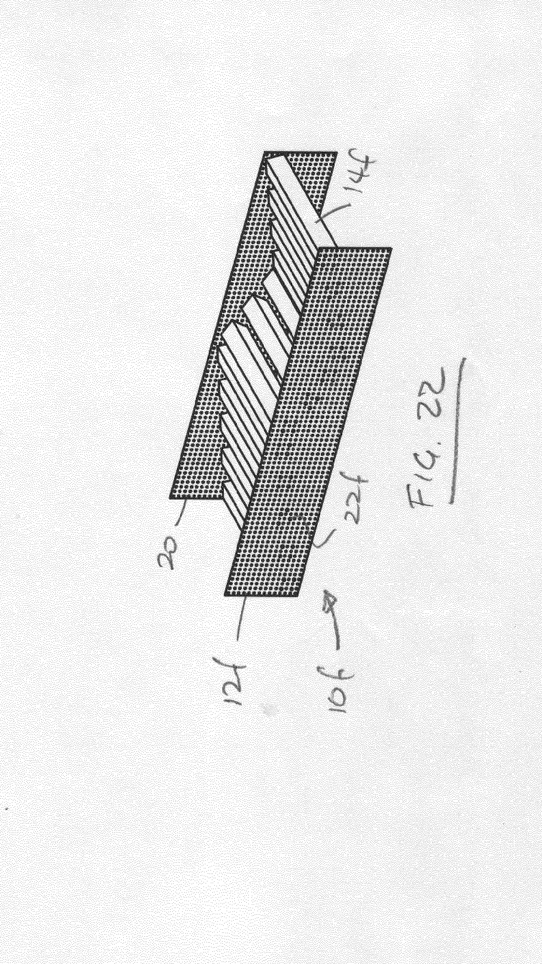

A further embodiment of lounger 10f is shown in FIG. 20 to 22 where the slats 14f are arranged in a sinuous configuration between side members 12f. Fasteners 22f secure the slats 14f to the side frames at the desired location with the spacing of the holes 20f ensuring multiple fasters in each of the slats 14f.

In each of the embodiments, the provision of the rectilinear grid of holes 20 allows secure fastening of slats 14 to the side members 12 and different configurations with the same side members 12. The slats 14 use dimensional lumber that is readily available and so avoids the need to pack and ship all the components required. A versatile, easily assembled and robust article of furniture is provided.

Although the invention has been described with reference to certain specific embodiments, various modifications thereof will be apparent to those skilled in the art without departing from the spirit and scope of the invention as outlined in the claims appended hereto. The entire disclosures of all references recited above are incorporated herein by reference.

## Claims

1. A side support for an article of furniture, the side support formed from a panel of a sheet material having oppositely directed faces, an array of holes formed in the panel extending between the faces and arranged as a uniform grid, the holes accommodating fasteners to secure the ends a plurality of support members between the pair of side supports.

2. The side support of claim 1, wherein the side support is made from steel.

3. The side support of claim 2, wherein the side support has a thickness of about 1/8 inch.

4. The side support of claim 1, wherein the side support is a wood laminate or resin material.

5. The side support of claim 4, wherein the side support has a thickness of about ½ inch or % inch.

6. The side support of claim 1, wherein the uniform grid is a rectilinear grid with uniform spacing between the holes.

7. The side support of claim 6, wherein the holes have a diameter about ¼ inch.

8. The side support of claim 7, wherein the uniform spacing is about 1 inch.

9. The side support of claim 1, wherein the faces delimit a core and the holes are formed through the core.

10. An article of furniture formed by a pair of side supports as claimed in claim 1 and a plurality of the support members fastened to each of the side supports.

11. The article of furniture of claim 10, wherein each support member is fastened to each side support by more than one fastener secured through more than one hole.

12. The article of furniture of claim 11, wherein the support member is nominal 4x4 lumber and up to 9 holes are provided for the side support.

13. The article of furniture of claim 12, wherein four fasteners are arranged in a 2 by 2 grid for fastening the side support to the support member.

14. The article of furniture of claim 10, wherein the article of furniture is a stool or chair.

15. The article of furniture of claim 10, wherein the article of furniture is a table.
